# EUROPEAN PATENT APPLICATION

(11) **EP 2 913 967 A1**
(43) Date of publication of application: **02.09.2015**
(21) Application number: 14305279.3
(22) Date of filing: 27.02.2014
(51) Int. Cl.: H04L 12/825

(54) **Improved traffic control in packet transport networks**

(71) Applicant: ALCATEL LUCENT, 92100 Boulogne-Billancourt (FR)
(72) Inventor: Ing-Jyh, Tsang, 2018 Antwerpen (BE); De Schepper, Koen, 2018 Antwerpen (BE)
(74) Representative: D'Halleweyn, Nele Veerle Trees Gertrudis

(57) **Abstract**

A method for traffic control in a communication network linking a sender node and a receiver node via an intermediate node, comprising at the intermediate node: receiving a packet from the sender node; processing the packet for transmission to the receiver node; monitoring the processing of the packet, to detect a transmission anomaly in the intermediate node; and if a transmission anomaly is detected, sending a feedback notification of the transmission anomaly to the sender node.

## Description

### Field of Invention

The field of the invention relates to traffic control in a communication network. Particular embodiments relate to the field of traffic control when transmission anomalies occur in intermediate nodes of the communication network.

### Background

Reliable transport protocols (RTPs) such as TCP (Transmission Control Protocol) retransmit packets when the sender does not receive an acknowledgement (ACK) from the client leading to a packet timeout at the sender, or when the sender receives (typically) three duplicate ACKs (acknowledgment messages) with a sequence number lower than expected. When packets are dropped at a network element within the end-to-end (E2E) path, even if this equipment is very close to the sender, the sender will only react after duplicate ACKs for the request are received or after a timeout occurs. This is not efficient as depending on the Round-Trip-Time (RTT) and timeout configuration it can take a long time, relative to the E2E path, until the sender starts to retransmit and/or decrease its transmission rate.

Separate solution attempts for retransmission and congestion control exist.
For retransmission, mechanisms are implemented at a segment of the E2E path, and are generally deployed on wireless or copper/coax-based links, where packets are most likely to be lost due to transmission errors. For example, the Automatic Repeat Request (ARQ) mechanism is commonly used in both DSL (Digital Subscriber Line) and the wireless physical layer. It buffers data at one end, while the other end only requests retransmission when data is corrupted or lost.
For congestion control, Explicit Congestion Notification (ECN), coupled with Active Queue Management (AQM), marks forwarded packets to indicate that a queue is getting to or past a certain threshold and will drop packets. ECN is only effective with AQM, and thus only works when AQM is enabled. Moreover, both have not been much used or adopted for several reasons, such as the difficulty to tune AQM parameters, or that the server/client and network equipment all have to be ECN-capable/enabled for the system to work.

Another approach proposed in the past was ICMP (Internet Control Message Protocol) Source Quench (SQ). Implemented in routers, this method would send a dedicated ICMP message (ICMP type 4, code 0), to indicate to senders to decrease their flow rates. SQ was deprecated by RFC1812 and RFC6633, for being ineffective and unfair as a mechanism for congestion control, in addition to security concerns over being easily used to launch denial of service (DoS) attack.

### Summary

Embodiments of the invention aim to improve traffic control in communication networks. A more specific object of embodiments of the invention is to improve response time of upstream sender nodes to transmission anomalies, while maintaining fairness.

According to a first aspect of the invention, there is provided a method for traffic control in a communication network linking a sender node and a receiver node via an intermediate node, comprising at the intermediate node: receiving a packet from the sender node; processing the packet for transmission to the receiver node; monitoring the processing of the packet, to detect a transmission anomaly in the intermediate node; and if a transmission anomaly is detected, sending a feedback notification of the transmission anomaly to the sender node.

Embodiments of the invention are based *inter alia* on the insight that providing explicit feedback notification of detected transmission anomalies to senders improves traffic control and decreases the total time needed for packet transmission in packet transport networks.

Using such embodiments, after monitoring received packet processing and detecting that a transmission anomaly has occurred, it is possible to send a feedback notification back upstream (i.e. in the direction of the sender node) to notify the sender node of the transmission anomaly, allowing it to react accordingly - if it wants to react at all. In this manner, the response time to transmission anomalies can be reduced compared to traditional approaches, such as waiting for duplicate ACKs for a fast retransmit, waiting for a retransmission timer to timeout, or waiting for, say, an explicit congestion notification in an acknowledgement response of the final receiver. Additionally, embodiments will allow for maintaining fairness of reliable transport protocols like TCP, in that use of the method can expedite upstream reactions that would have occurred anyway. Also, an additional benefit is that proposed embodiments are migration-friendly to legacy systems: the received feedback notification may be configured in such a way as to not confuse any higher-level communication layer, for instance by being generated in such a way as to be interpreted as a keepalive-like probe by legacy systems.

According to an embodiment, detecting a transmission anomaly comprises any of the following: detecting a transmission failure; and/or detecting a packet drop due to buffer congestion in the intermediate node; and/or detecting a packet congestion warning due to buffer congestion in the intermediate node.
In this manner, the method may be used to respond to a plurality of typical transmission anomalies occurring in intermediate nodes of a communication network. More generally, detecting the transmission anomalies may comprise detecting any type of error in a transmission of a packet leading to a failed transmission of the packet, detecting the occurrence or imminence of congestion (i.e. being filled completely or to a dangerously high level) in a buffer in an intermediate node, or a combination of these situations.

According to another embodiment, the feedback notification comprises a packet retransmission request for retransmitting the packet by the sender node. According to yet another embodiment, the feedback notification comprises a packet congestion indication indicating congestion at the intermediate node. The skilled person will understand that the feedback notification may also comprise both a packet retransmission request and a packet congestion indication, in case an intermediate node has failed to transmit a packet and is (in danger of being) congested.
In this manner, it is possible to ensure that a sender is notified respectively (i) that it should retransmit a packet, if a transmission failure or packet drop due to congestion or the like has occurred, and/or (ii) that it should react to alleviate congestion at the intermediate node, for example by decreasing its transmission rate.

According to a preferred embodiment, the packet is a TCP (Transmission Control Protocol) segment.
In this manner, TCP's implicit feedback mechanisms usable for traffic control (fast retransmit after duplicate ACKs and retransmission timeout) can advantageously be improved by sending feedback notification in a more explicit manner.

According to another preferred embodiment, the method comprises, if a transmission anomaly is detected, including said feedback notification in an adapted TCP response message.
In this manner, the method may provide explicit feedback to an upstream sender node without the need of an additional protocol resting on top of TCP, and potentially interfering with TCP's operation, as in the case of ICMP SQ.

According to a more developed embodiment, the adapted TCP response message is configured such that:- it has reversed source and destination addresses and port numbers of the received packet; and
- it contains an identification representative of the sequence number of the received packet.

Reversing the source and destination addresses and port numbers (also denoted the 'socket pair') may advantageously provide sufficient information in the returned feedback notification to allow the sender to know which specific TCP connection incurred a transmission anomaly. Additionally, including an identification that represents the sequence number of the received packet may advantageously provide sufficient information in the returned feedback notification to allow the sender to know which packet(s) was/were involved in the transmission anomaly.
Typical implementations of the adapted TCP response message may have no (i.e. zero-length) data payload, since typically the intermediate node will not have higher-layer data of its own to transmit to the sender node over the TCP connection. Moreover, this keeps network traffic load to a minimum, but it may also advantageously prevent disturbing the higher-level communication layer. Typical RTPs (such as TCP) allow sending 'empty' messages, for instance to acknowledge receipt of a packet or to probe the keepalive-status of a connection (cf. RFC1122 §4.2.3.6). Typical implementations may also have the ACK (acknowledgment) flag set to off. This may advantageously help ensure that legacy equipment will not interpret the adapted TCP response message as an actual acknowledgment of a 'received' packet (or as a duplicate acknowledgement). However, it is foreseen that this is not a strict necessity if all or nearly all network equipment involved in the communication is aware of the nature of the adapted TCP response message, and will therefore not be confused if an ACK flag would for some reason be set to on.

According to a further developed embodiment, the adapted TCP response message is configured such that it has an option field indication representing that a packet has not been transmitted.
In this manner, a sender node receiving the adapted TCP response message may be notified that it should react accordingly, preferably by retransmitting the packet. Using an option field indication in this manner is also friendly to legacy systems, in that such legacy systems can choose to ignore the new option.

According to another embodiment, the adapted TCP response message is configured such that it has an option field indication representing that an intermediate node is congested.
In this manner, a sender node receiving the adapted TCP response message may be notified that it should react accordingly, preferably by adjusting its transmission rate. For this embodiment, the use of an option field indication is also friendly to legacy systems, analogously to above. According to yet another aspect of the invention, there is provided a method for traffic control in a communication network linking a sender node and a received node via an intermediate node, comprising at the sender node: receiving a feedback notification of a transmission anomaly from the intermediate node, if a transmission anomaly is detected by the intermediate node; and at least one of: if the feedback notification comprises a packet retransmission request for retransmitting a packet by the sender node, retransmitting the packet to the receiver node; and if the feedback notification comprises a packet congestion indication indicating congestion at the intermediate node, adjusting a transmission rate; and if no feedback notification is received, and duplicate acknowledgements from the receiver node trigger a fast retransmit a the sender node, retransmitting the packet to the receiver node without reducing the transmission rate.
In this manner, at least the following situations or combinations thereof are possible: (i) receiving a feedback notification comprising a packet retransmission request and therefore retransmitting the packet; (ii) receiving a feedback notification comprising a packet congestion indication and therefore adjusting a transmission rate; (iii) receiving a feedback notification comprising both a packet retransmission request and a packet congestion indication, and therefore adjusting a transmission rate and retransmitting the packet at that adjusted transmission rate; or (iv) not receiving any feedback notifications comprising packet congestion indications (and thus assuming there are no congested intermediate nodes) but receiving duplicate acknowledgements from the receiver node (which indicates that the receiver node has not received the packet) and therefore retransmitting the packet without reducing the transmission rate, as opposed to traditional fast retransmit mechanisms after duplicate acknowledgements have been received which not only comprise retransmitting the packet, but also lowering the transmission rate (to a value depending on the TCP flavour), which would be wasteful in this situation since it can be assumed that none of the intermediate nodes are congested.

According to an embodiment, detecting a transmission anomaly comprises any of the following: detecting a transmission failure; and/or detecting a packet drop due to buffer congestion in the intermediate node; and/or detecting a packet congestion warning due to buffer congestion in the intermediate node.

According to another embodiment, the feedback notification comprises a packet retransmission request for retransmitting the packet by the sender node.

According to yet another embodiment, the feedback notification comprises a packet congestion indication indicating congestion at the intermediate node.

According to a preferred embodiment, the packet is a TCP (Transmission Control Protocol) segment.

According to another preferred embodiment, the method comprises, if a transmission anomaly is detected, including said feedback notification in an adapted TCP response message.

According to a more developed embodiment, the adapted TCP response message is configured such that:- it has reversed source and destination addresses and port numbers of the received packet; and
- it contains an identification representative of the sequence number of the received packet.

According to a further developed embodiment, the adapted TCP response message is configured such that it has an option field indication representing that a packet has not been transmitted.

According to another embodiment, the adapted TCP response message is configured such that it has an option field indication representing that an intermediate node is congested.

According to yet another aspect of the invention, there is provided a control module for use in an intermediate node linking a sender node and a receiver node in a communication network, comprising: a monitoring unit configured for monitoring a processing of a packet that is received from the sender node at the intermediate node, to detect a transmission anomaly in the intermediate node; and a notification unit configured for, if a transmission anomaly is detected, generating a feedback notification for the sender node according to the detected transmission anomaly.

According to an embodiment, detecting a transmission anomaly comprises any of the following: detecting a transmission failure; and/or detecting a packet drop due to buffer congestion in the intermediate node; and/or detecting a packet congestion warning due to buffer congestion in the intermediate node.

According to another embodiment, the feedback notification comprises a packet retransmission request for retransmitting the packet by the sender node.

According to yet another embodiment, the feedback notification comprises a packet congestion indication indicating congestion at the intermediate node.

According to a preferred embodiment, the packet is a TCP (Transmission Control Protocol) segment.

According to another preferred embodiment, the method comprises, if a transmission anomaly is detected, including said feedback notification in an adapted TCP response message.

According to a more developed embodiment, the adapted TCP response message is configured such that:- it has reversed source and destination addresses and port numbers of the received packet; and
- it contains an identification representative of the sequence number of the received packet.

According to a further developed embodiment, the adapted TCP response message is configured such that it has an option field indication representing that a packet has not been transmitted.

According to another embodiment, the adapted TCP response message is configured such that it has an option field indication representing that an intermediate node is congested.

According to yet another aspect of the invention, there is provided an intermediate network node for use in a communication network, linking a sender node and a receiver node, comprising: a control module as described above; receiving means configured for receiving a packet from the sender node; processing means configured for processing the packet for transmission to the receiver node; and sending means configured for sending a feedback notification.

According to yet another aspect of the invention, there is provided a sender network node for use in a communication network, linked to a receiver node via an intermediate node, comprising: receiving means configured for receiving a feedback notification of a transmission anomaly from the intermediate node, if a transmission anomaly is detected by the intermediate node; sending means configured for retransmitting the packet to the receiver node, if the feedback notification comprises a packet retransmission request for retransmitting a packet by the sender node; and adjusting means configured for adjusting a transmission rate, if the feedback notification comprises a packet congestion indication indicating congestion at the intermediate node; and if no feedback notification is received, and duplicate acknowledgements from the receiver node trigger a fast retransmit a the sender node, retransmitting the packet to the receiver node without reducing the transmission rate.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a communication diagram according to an embodiment of a method according to the invention, in case of a transmission failure;
Figure 2 illustrates schematically a communication diagram according to an embodiment of a method according to the invention, in case of a packet drop warning due to buffer congestion;
Figure 3 illustrates schematically a communication diagram according to an embodiment of a method according to the invention, in case of a packet drop due to buffer congestion;
Figure 4 illustrates schematically possible network communication flows corresponding to figures 1-3 and a network communication flow according to a prior art approach;
Figure 5 illustrates schematically an embodiment of a control module according to the invention;
Figure 6 illustrates schematically an embodiment of an intermediate node according to the invention; and
Figure 7 illustrates schematically an embodiment of a sender node according to the invention.

### Description of embodiments

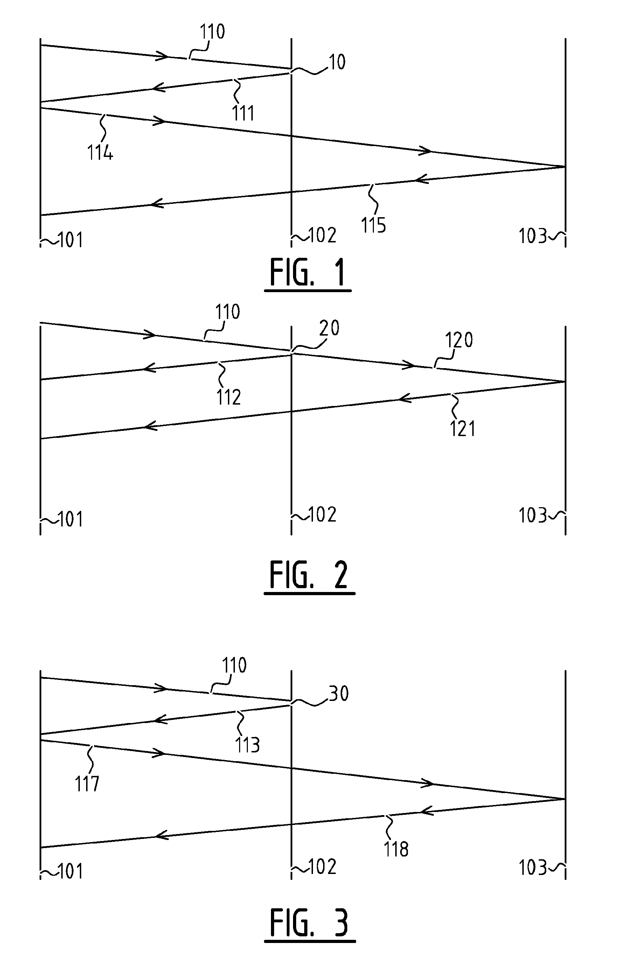

Figure 1 illustrates schematically a communication diagram according to an embodiment of a method according to the invention, in case of a transmission failure 10. A transmission failure 10 is taken to mean that the further transmission of a packet to a downstream receiver node 103 has failed for any of a number of reasons not including packet drop due to buffer congestion at an intermediate node 102, and that this is detectable to, say, the sending means used for the (attempted) transmission, as opposed to a succeeded transmission that has been lost *en route.* As the transmission has failed 10 for a reason not related to packet drop due to buffer congestion, it can be assumed that the intermediate node 102 is not congested, and that there is therefore no need for a sender node 101 to adjust its transmission rate to the intermediate node 102. Since the transmission of the packet has failed 10, however, and since this is known to the intermediate node 102, the intermediate node 102 can be configured to generate a feedback notification 111 comprising a retransmission request for the packet in order to request that the sender node 101 retransmit 114 the packet. Since otherwise (i.e. without sending a feedback notification 111) the sender node 101 would have to wait for duplicate acknowledgements indicating that a packet has gone missing 10, or for a retransmission timer to timeout before attempting to retransmit the packet 114, the time taken for the packet to actually reach the receiver node 103 can be reduced, improving overall traffic efficiency.

By generating a feedback notification (without the original payload) to be sent back 111 to the server node 101, the proposed method embodiment can 'replace' a duplicated ACK from the intended receiver node 103, by mirroring back the lost packet's header, source and destination ports, and the sequence number (indicated in the ACK number field). In TCP, this can be implemented using a new option field to inform the sender node 101 which packet was lost 10 and that such a message was generated by a network element (here: 102) as opposed to the receiver 103 (since the ACK flag bit is set to off). The sender node 101 could then immediately retransmit the data 114 (and/or decrease its transmission rate if there was congestion, as in figure 2 and figure 3), following the standard TCP congestion control mechanism, irrespective of TCP flavour (Cubic, Reno ...).

Figure 2 illustrates schematically a communication diagram according to an embodiment of a method according to the invention, in case of a packet drop warning 20 due to buffer congestion. Buffer congestion may comprise the situation that a buffer in an intermediate node 102 is sufficiently filled for an Active Queue Management mechanism (AQM) or the like to operate by issuing a warning about the imminent impossibility to store and transmit one or more further incoming packets. If such a packet drop warning 20 (i.e. a warning that this packet can still be processed 120 but that further incoming packets may have to be dropped) is issued and detected, the intermediate node 102 may send to the sender node 101 a feedback notification 112 comprising a packet congestion indication, thereby informing the sender node 101 of the congestion and the danger of future packet drops in the intermediate node 102, in order for it to react accordingly, preferably by triggering the sender node's 101 congestion control mechanism to adjust its transmission rate to a lower value to help alleviate the congestion.

In TCP, the feedback notification 112 may be comprised in an adapted TCP response message, using for instance the same new option field as above, but also setting the TCP ECE (ECN-Echo) flag to on (and/or optionally the IP (Internet Protocol) Echo flag). This indicates to the sender node 101 that the packet was not dropped, but serves as an early congestion indicator, and notifies the sender node 101 that it needs to adjust its transmission rate, which is preferably done by triggering its congestion control mechanism. Since the sender node 101 was made aware that the packet was not dropped, it does not retransmit the packet (unless other mechanisms such as retransmission timeout or fast retransmit require it to do so).

An issue with ICMP SQ and analogous approaches to the problem of buffer congestion using dedicated messages is that they form an independent congestion control mechanism, in between the congested network element and the source, which then can interfere with E2E congestion control mechanisms, such as those in TCP. The proposed mechanism does not interfere with these mechanisms; at most, it expedites them. Also, the advantage of the proposed mechanism in comparison with the traditional ECN mechanism is that the proposed mechanism is faster, as the sender node 101 can be informed of early congestion indication in less than one RTT time. In addition, the proposed mechanism can be used independently of the AQM algorithm used, e.g. (W)RED or (Weighted) Random Early Detection, Adaptive RED, CoDeL (Controlled Delay), PIE (Proportional Integral Enhanced) or any other mechanism. Also it is independent of the congestion control mechanism used by the sender node 101, i.e. it can be used if the sender node 101 or server follows Cubic, Reno, Compound TCP or any other mechanisms.

Figure 3 illustrates schematically a communication diagram according to an embodiment of a method according to the invention, in case of a packet drop 30 due to buffer congestion. Buffer congestion may comprise the situation that a buffer in an intermediate node 102 for temporary storage of packets that are being processed for transmission is either completely or sufficiently filled such that received packets 110 are dropped 30. Without a management mechanism, the most recently received packet will be dropped; with a queue management mechanism, the most recently received packet, a packet that had been in temporary storage for a longer time, or a packet of a heavy-bandwidth or low-priority flow may be dropped. In any case, the intermediate node 102 is congested, in that it probably cannot adequately further transmit (some) received packets. Therefore, the intermediate node 102 sends a feedback notification 113 to the sender node 101 comprising a retransmission request for the packet to have the sender node 101 retransmit the packet 117 (since the intermediate node 102 had to drop the packet 30) as well as a packet congestion indication (since the sender node 101 should be informed of the congestion in the intermediate node 102 in order for it to react accordingly, preferably by adjusting its transmission rate to a lower value, for instance by triggering its congestion control mechanism).

The proposed mechanism informs the TCP sender 101 of an undelivered packet in a faster way than by having the receiver 103 transmit duplicated ACKs, and also faster than by waiting for a retransmission timeout. A duplicated ACK is typically only sent in response to the packet actually being received; in case of a blocking congestion, TCP relies on the sender's 101 timeout to decrease the transmission rate. Therefore, the proposed mechanism will allow a faster and more reliable way to react to congestion. In case packets are dropped by a network element 102 as a result of transient congestion, e.g. if a queue is filled due to a spike in traffic - so only for a short period, this mechanism will have the dropped packet be retransmitted in a shorter time frame, while not interfering in the traditional TCP retransmission mechanism.

Current solutions rely on timeout at the sender 101 side or on marking packets at the network element 102 to the receiver 103 which then sends the information back to the sender 103 of possible packet drop (Early Congestion Notification), or they rely on sending duplicate ACK or SACK (Selective ACK), which is an indirect way of determining packet drop 30. These are all mechanisms that take longer than the proposed scheme, and additionally, they only give indicative information as opposed to clear information. The skilled person will understand that the proposed mechanism would also be compatible with the SACK option. The proposed solution should also take less than one RTT, while traditional mechanisms will take at least one or more RTT, to indicate congestion or packet drop. Moreover, the sender 101 in general still needs to make assumptions, for instance of packet reordering, thus waiting for more duplicated ACK, before triggering a corrective action. The mechanism proposed here is especially useful for upstream bottleneck links 102 of access networks, which are close to the end-user 101, and avoid the majority of the round trip time. This is advantageous for queue size and latency (bufferbloat) in home gateways (such as 102) which is seen today as a major problem of the Internet. Also it would be beneficial for both up- and downstream for mobile traffic, which typically also have bufferbloat problems.

Sending a packet drop indication to the sender at the moment packets are actually dropped 30 (or about to be dropped 20) is the fastest deterministic way to indicate to the sender 101 that there is packet drop and/or that there is congestion in the network. The sender 101 will be informed with certainty of a dropped packet, while it does not need to make assumptions of packet reordering. In addition, the sender 101 is informed of the level of congestion at the intermediate network elements (such as 102). Therefore, it can make a faster and more precise decision to retransmit the package 117 and/or to adjust the transmission rate 117. This gives an enhanced transport mechanism, as it reduces the overall E2E transmission latency.

Another advantage of the proposed mechanism is that there is no need to keep flow state at the intermediate network element 102, as it will send a TCP message (an adapted TCP response message) 113 back to the sender node 101, with inverted ports, addresses and extra option, thus avoiding issues with firewalls and the need to pinhole for a separate massage flow scheme. This new packet sent 113 from the network element 102, with no data payload (zero length), ACK number indicating the sequence number of the lost packet 110, and additional option field, may be interpreted as a keepalive-like packet. However, it would have its ACK flag bit set to off, so that the sender 101 does not interpret it as an actual acknowledgement of a packet, sent by the receiver 103; also it will have the data-offset field set to greater than 5, indicating that an option field is present. In fact, by designing in this way, we can ensure a certain level of backwards compatibility toward servers that might not understand this new scheme: these would interpret the response message packets similarly to keepalive packets with no data (zero length), but as the ACK flag bit is set to off, current TCP stacks would ignore this packet. It is clear that the mechanism requires changes on the TCP stack, but it will work either way, whether the network element supports the mechanism or not. There is no need to change the receiver part and it is backward compatible; thus, migration to introduce this mechanism is straightforward.

Of course, in the case that the packet is dropped 30 at a network equipment 102 and then the retransmitted packet 114,117 is lost afterwards, for example at a DSL link, the traditional TCP mechanisms are still responsible for retransmitting the packet the second time that it was lost, e.g. using TCP's retransmission timeout or fast retransmit due to duplicate ACKs.

Another advantageous use case of embodiments of the proposed mechanism is to differentiate between packet loss due to congestion or due to transmission error (e.g. bit error due to noise in a wireless or xDSL transmission path), if all network nodes between a sender node and a receiver node have adopted embodiments of the proposed mechanism, in which any packet loss due to congestion is notified by the respective congested node(s). When a sender node receives duplicated ACKs from the receiver node (for instance, three duplicate ACKs, as per a common implementation of the traditional TCP mechanism) without also receiving feedback notifications comprising packet congestion indications from intermediate nodes, the sender node can assume that a packet was lost due to transmission error, since any packet loss due to congestion would have been notified by the intermediate node that dropped the packet and this has not happened. An advantage of thus distinguishing packet loss due to (i) transmission error or (ii) congestion is that in the first case (i) the congestion control mechanism does not need to be triggered (as opposed to the second case (ii)), and in fact it is advantageous that the sender node does not initiate congestion control (to reduce its transmission rate) as it just needs to retransmit the lost packet. Lowering the transmission rate would result in wasted transmission capacity. In TCP, the traditional mechanisms (and most of the different implementations / TPC flavours) do not distinguish between packet loss due to congestion and due to transmission error (bit error or packet corruption).

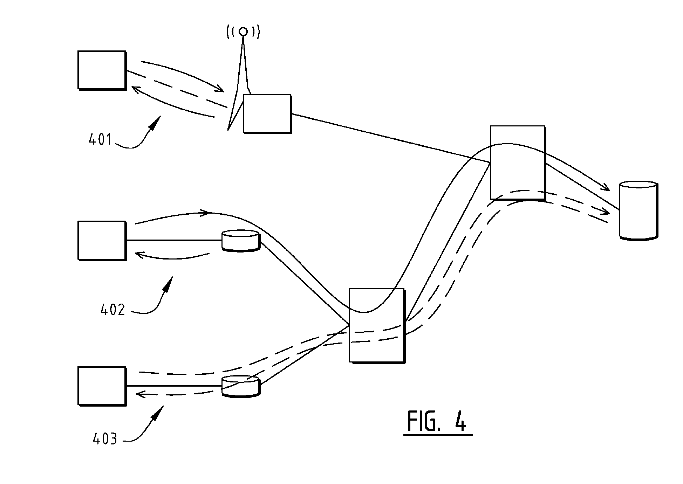

Figure 4 illustrates schematically possible network communication flows corresponding to figures 1-3 (for figure 1 and figure 3: 401; for figure 2: 402) and a network communication flow according to a prior art approach using Explicit Congestion Notification (ECN) 403. It is noted that ECN is only applicable to the case of a packet drop warning due to buffer congestion in an intermediate router; ECN is not applicable to the case of a packet being actually dropped, or the case of a transmission failure occurring. Also, while forward packet marking mechanisms like ECN do not send feedback notification messages at all, their disadvantage is that the marking has to first travel all the way to the receiver node, so that the receiver node can then send to the server node a congestion notification, which only then can react accordingly, for example by decreasing its transmission rate. Using the proposed scheme 402, it is possible to quickly send a notification message to allow the sender node to decrease its transmission rate. On the fixed access link 403, the traditional ECN method is shown, when there is a packet drop warning close to the sender node. The intermediate node issues the packet drop warning, marks the packet with ECN and delivers it to the receiver node. The receiver node indicates to the sender node that there was congestion/drop in its return acknowledgment. The sender node will then retransmit and/or adjust the transmission rate, as needed. Alternatively, in the wireless case 401, a feedback notification comprising a packet drop indication is immediately sent when a packet is dropped, and the sender node will know as quickly as possible that it has to retransmit (and/or reduce transmission rate if there was congestion).

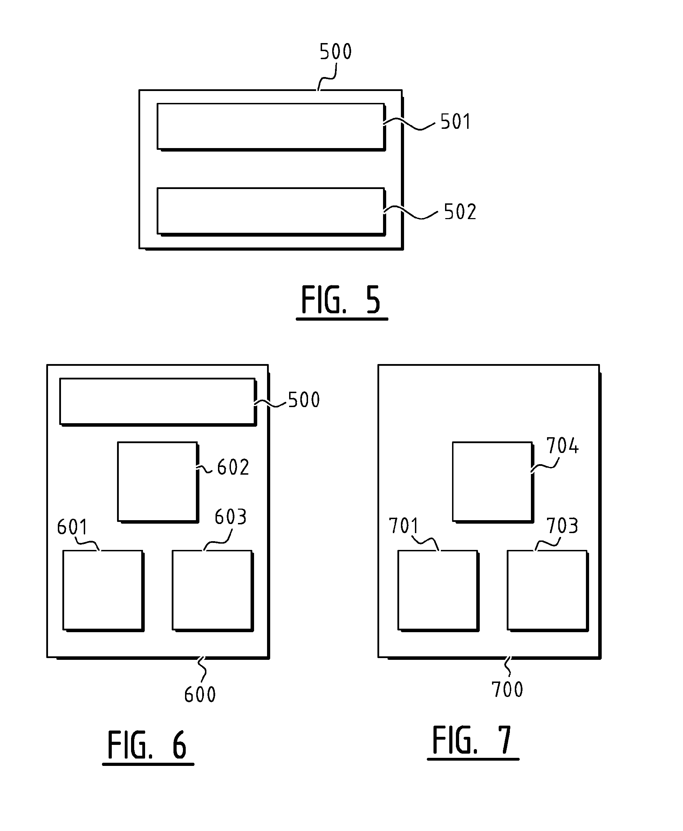

Figure 5 illustrates schematically an embodiment of a control module 500 according to the invention, for use in an intermediate node (not shown) linking a sender node and a receiver node in a communication network (not shown). The control module 500 is shown comprising a monitoring unit 501 and a notification unit 502. The monitoring unit 501 is configured for monitoring a processing of a packet that is received from the sender node at the intermediate node, to detect a transmission anomaly in the intermediate node. The notification unit 502 is configured for, if a transmission anomaly is detected, generating a feedback notification for the sender node according to the detected transmission anomaly. The control module 500 is further also configurable for interoperation with other modules, units or means (not shown) that are typically present in an intermediate node, such as a receiving module for receiving packets from a sender node, a processing module for processing the received packets for further transmission, and a sending module for transmitting the processed packets to a further receiver node.

This embodiment can be used as part of the quality of service (QoS) engine of an intermediate node. When a packet cannot be further transmitted to the receiver node (for instance, if a transmission error occurs or if it is decided that a packet should be dropped - independently of which Active Queue Management strategy implementation is used, e.g. Tail Drop, (Weighted) Random Early Detection or any other mechanism), the packet is transferred to the control module 500, which generates a feedback notification to be sent back to the sender node. The feedback notification is injected on an opposite path to be sent to the sender node (for instance a TCP server) and the indication that a packet was dropped (i.e. a retransmission request) triggers a packet retransmission and/or the indication that congestion was incurred (i.e. the packet congestion indication) triggers initiating a congestion control mechanism at the sender node, in a faster way than using the traditional TCP mechanisms.

A controller element to adjust the number of feedback notifications sent to an originator (e.g. a sender node) can be implemented, so that the control module 500 does not generate an overflow of feedback notifications. In addition, a mechanism to control that the feedback notifications themselves are not sent to another control module due to queue overflow can be implemented, thereby avoiding an internal packet processing loop within this mechanism. In terms of security, the network operator is responsible for the equipment which implements the control module 500; it can be deployed, configurable or controllable as any other network equipment QoS feature. In addition, different authentication algorithms, such as using hashing or encryption functions, can be implemented to avoid attacks against the sender's servers.

Also, instead of using a *stateless* approach, some embodiments of the invention may take a *stateful* approach, in that some state information about packet processing is (temporarily) stored. Such an embodiment would be suitable to be implemented in home gateways (i.e. close to the end-user), as additional functionality to stateful firewalls, or coupled with Carrier-Grade NAT (CG-NAT) functions on some routers, since the stateful requirements might limit its usefulness to be implemented next to the queues of high throughput network elements, such as routers or access nodes. The mechanism could then also be made backwards compatible with existing TCP stacks, and could for instance keep the last sequence number ACKed by the receiver and send a plurality of extra duplicate ACKs using that sequence number (depending on the required number of duplicate ACKs of the specific implementation), thus triggering a faster retransmit and congestion adaptation, compatible with all existing TCP stacks, without the risk of ACKing content that was not received by the receiver.

Figure 6 illustrates schematically an embodiment of an intermediate node 600 according to the invention, for use in a communication network, linking a sender node and a receiver node (neither shown). The intermediate node 600 comprises a control module 500 as described in figure 5, receiving means 601, processing means 602 and sending means 603. The receiving means 601 are configured for receiving a packet from the sender node. The processing means 602 are configured for processing the packet for transmission to the receiver node. The sending means 603 are configured for sending a feedback notification.

Figure 7 illustrates schematically an embodiment of a sender node 700 according to the invention, for use in a communication network, linked to a receiver node via an intermediate node (neither shown). The sender node 700 comprises receiving means 701, sending means 703 and adjusting means 704. The receiving means 701 are configured for receiving a feedback notification of a transmission anomaly from the intermediate node, upon detection of the transmission anomaly by the intermediate node. The sending means 703 are configured for retransmitting the packet to the receiver node, if the feedback notification comprises a packet retransmission request for retransmitting a packet by the sender node. The adjusting means 704 are configured for adjusting a transmission rate, if the feedback notification comprises a packet congestion indication indicating congestion at the intermediate node.

Whilst the principles of the invention have been set out above in connection with specific embodiments, it is to be understood that this description is merely made by way of example and not as a limitation of the scope of protection which is determined by the appended claims.

## Claims

1. A method for traffic control in a communication network linking a sender node and a receiver node via an intermediate node, comprising at the intermediate node:
- receiving a packet from the sender node;
- processing the packet for transmission to the receiver node;
- monitoring the processing of the packet, to detect a transmission anomaly in the intermediate node; and
- if a transmission anomaly is detected, sending a feedback notification of the transmission anomaly to the sender node.

2. The method of claim 1, wherein detecting a transmission anomaly comprises any of the following:
- detecting a transmission failure; and/or
- detecting a packet drop due to buffer congestion in the intermediate node; and/or
- detecting a packet congestion warning due to buffer congestion in the intermediate node.

3. The method of any of the previous claims, wherein the feedback notification comprises a packet retransmission request for retransmitting the packet by the sender node.

4. The method of any of the previous claims, wherein the feedback notification comprises a packet congestion indication indicating congestion at the intermediate node.

5. The method of any of the previous claims, wherein the packet is a TCP (Transmission Control Protocol) segment.

6. The method of any of the previous claims, comprising, if a transmission anomaly is detected, including said feedback notification in an adapted TCP response message.

7. The method of claim 6, wherein the adapted TCP response message is configured such that:
- it has reversed source and destination addresses and port numbers of the received packet; and
- it contains an identification representative of the sequence number of the received packet.

8. The method of claim 6 or 7, wherein the adapted TCP response message is configured such that:
- it has an option field indication representing that a packet has not been transmitted.

9. The method of any of the claims 6-8, wherein the adapted TCP response message is configured such that:
- it has an option field indication representing that an intermediate node is congested.

10. A method for traffic control in a communication network linking a sender node and a received node via an intermediate node, comprising at the sender node:
- receiving a feedback notification of a transmission anomaly from the intermediate node, if a transmission anomaly is detected by the intermediate node; and at least one of:
- if the feedback notification comprises a packet retransmission request for retransmitting a packet by the sender node, retransmitting the packet to the receiver node; and
- if the feedback notification comprises a packet congestion indication indicating congestion at the intermediate node, adjusting a transmission rate; and
- if no feedback notification is received, and duplicate acknowledgements from the receiver node trigger a fast retransmit a the sender node, retransmitting the packet to the receiver node without reducing the transmission rate.

11. A control module for use in an intermediate node linking a sender node and a receiver node in a communication network, comprising:
- a monitoring unit configured for monitoring a processing of a packet that is received from the sender node at the intermediate node, to detect a transmission anomaly in the intermediate node; and
- a notification unit configured for, if a transmission anomaly is detected, generating a feedback notification for the sender node according to the detected transmission anomaly.

12. The control module of claim 11, wherein detecting a transmission anomaly comprises any of the following:
- detecting a transmission failure; and/or
- detecting a packet drop due to buffer congestion in the intermediate node; and/or
- detecting a packet congestion warning due to buffer congestion in the intermediate node.

13. An intermediate network node for use in a communication network, linking a sender node and a receiver node, comprising:
- a control module of claim 11 or 12;
- receiving means configured for receiving a packet from the sender node;
- processing means configured for processing the packet for transmission to the receiver node; and
- sending means configured for sending a feedback notification.

14. A sender network node for use in a communication network, linked to a receiver node via an intermediate node, comprising:
- receiving means configured for receiving a feedback notification of a transmission anomaly from the intermediate node, upon detection of the transmission anomaly by the intermediate node;
- sending means configured for retransmitting the packet to the receiver node, if the feedback notification comprises a packet retransmission request for retransmitting a packet by the sender node; and
- adjusting means configured for adjusting a transmission rate, if the feedback notification comprises a packet congestion indication indicating congestion at the intermediate node.

15. A computer program comprising computer-executable instructions for performing a method, when the program is run on a computer, according to any of the claims 1-10.

## Amended claims

### Amended claims in accordance with Rule 137(2) EPC.

1. A method for traffic control in a communication network linking a sender node (101) and a receiver node (103) via an intermediate node (102), comprising at the intermediate node:
- receiving (110) a packet from the sender node;
- processing the packet for transmission to the receiver node;
- monitoring the processing of the packet, to detect a transmission anomaly (10, 30) in the intermediate node; and **characterized by**
- if a transmission anomaly is detected, sending a feedback notification (111, 113) of the transmission anomaly to the sender node; and
wherein the feedback notification comprises a packet retransmission request for retransmitting (114, 117) the packet by the sender node.

2. The method of claim 1, wherein detecting a transmission anomaly comprises any of the following:
- detecting a transmission failure (10); and/or
- detecting a packet drop (30) due to buffer congestion in the intermediate node; and/or
- detecting a packet congestion warning (20) due to buffer congestion in the intermediate node.

3. The method of any of the previous claims, wherein the feedback notification comprises a packet congestion indication indicating congestion at the intermediate node.

4. The method of any of the previous claims, wherein the packet is a TCP (Transmission Control Protocol) segment.

5. The method of any of the previous claims, comprising, if a transmission anomaly is detected, including said feedback notification in an adapted TCP response message.

6. The method of claim 5, wherein the adapted TCP response message is configured such that:
- it has reversed source and destination addresses and port numbers of the received packet; and
- it contains an identification representative of the sequence number of the received packet.

7. The method of claim 5 or 6, wherein the adapted TCP response message is configured such that:
- it has an option field indication representing that a packet has not been transmitted.

8. The method of any of the claims 5-7, wherein the adapted TCP response message is configured such that:
- it has an option field indication representing that an intermediate node is congested.

9. A method for traffic control in a communication network linking a sender node (101) and a receiver node (103) via an intermediate node (102), **characterized by** comprising at the sender node:
- receiving a feedback notification (111, 113) of a transmission anomaly (10, 30) from the intermediate node, if a transmission anomaly is detected by the intermediate node, wherein the feedback notification comprises a packet retransmission request for retransmitting the packet by the sender node; and at least one of:
- if the feedback notification comprises a packet retransmission request for retransmitting a packet by the sender node, retransmitting (114, 117) the packet to the receiver node; and
- if the feedback notification comprises a packet congestion indication indicating congestion at the intermediate node, adjusting (117) a transmission rate; and
- if no feedback notification is received, and duplicate acknowledgements from the receiver node trigger a fast retransmit a the sender node, retransmitting the packet to the receiver node without reducing the transmission rate.

10. A control module (500) for use in an intermediate node (102) linking a sender node (101) and a receiver node (103) in a communication network, comprising:
- a monitoring unit (501) configured for monitoring a processing of a packet that is received from the sender node at the intermediate node, to detect a transmission anomaly in the intermediate node; and **characterized by**
- a notification unit (502) configured for, if a transmission anomaly is detected, generating a feedback notification for the sender node according to the detected transmission anomaly, wherein the feedback notification comprises a packet retransmission request for retransmitting the packet by the sender node.

11. The control module of claim 10, wherein detecting a transmission anomaly comprises any of the following:
- detecting a transmission failure; and/or
- detecting a packet drop due to buffer congestion in the intermediate node; and/or
- detecting a packet congestion warning due to buffer congestion in the intermediate node.

12. An intermediate network node (600) for use in a communication network, linking a sender node (101) and a receiver node (102), comprising:
- a control module (500) of claim 10 or 11;
- receiving means (601) configured for receiving a packet from the sender node;
- processing means (602) configured for processing the packet for transmission to the receiver node; and **characterized by**
- sending means (603) configured for sending a feedback notification, wherein the feedback notification comprises a packet retransmission request for retransmitting the packet by the sender node.

13. A sender network node (700) for use in a communication network, linked to a receiver node (103) via an intermediate node (102), **characterized by** comprising:
- receiving means (701) configured for receiving a feedback notification of a transmission anomaly from the intermediate node, upon detection of the transmission anomaly by the intermediate node, wherein the feedback notification comprises a packet retransmission request for retransmitting the packet by the sender node;
- sending means (703) configured for retransmitting the packet to the receiver node, if the feedback notification comprises a packet retransmission request for retransmitting a packet by the sender node; and
- adjusting means (704) configured for adjusting a transmission rate, if the feedback notification comprises a packet congestion indication indicating congestion at the intermediate node.

14. A computer program comprising computer-executable instructions for performing a method, when the program is run on a computer, according to any of the claims 1-9.
